# EUROPÄISCHE PATENTSCHRIFT

(11) **EP 3 331 679 B1**
(45) Veröffentlichungstag und Bekanntmachung des Hinweises auf die Patenterteilung: **11.03.2020**
(21) Anmeldenummer: 16747747.0
(22) Anmeldetag: 15.07.2016
(51) Int. Cl.: B27K 3/34, B32B 29/02, B32B 29/06, B27K 3/16, B32B 21/06, B44C 5/04, B05D 7/06

(54) **VERFAHREN ZUR BESCHICHTUNG VON HOLZWERKSTOFFEN OHNE ABSCHLEIFEN DER OBERFLÄCHE**
METHOD FOR COATING WOOD-BASED MATERIALS WITHOUT ABRADING THE SURFACE
PROCÉDÉ DE REVÊTEMENT DE MATÉRIAUX À BASE DE BOIS SANS MEULAGE DE SURFACE

(30) Priorität: 07.08.2015 DE 102015215096
(43) Veröffentlichungstag der Anmeldung: 13.06.2018
(73) Patentinhaber: BASF SE, 67056 Ludwigshafen am Rhein (DE)
(72) Erfinder: LUNKWITZ, Ralph, 67434 Neustadt (DE); ASSMANN, Jens, 67435 Neustadt (DE); FINKENAUER, Michael, 67699 Schneckenhausen (DE)
(74) Vertreter: BASF IP Association
(86) Internationale Anmeldenummer: PCT/EP2016/066881
(87) Internationale Veröffentlichungsnummer: WO 2017/025273

(56) Entgegenhaltungen:
- CA-A- 1 116 068
- US-A- 4 182 794
- US-A- 5 654 091

## Beschreibung

Die vorliegende Erfindung betrifft ein Verfahren zur Herstellung von Holzwerkstoffen mit glatter Oberfläche durch Auftragen von Tensiden auf die Oberfläche und dann Beschichtung mit Dekorpapieren.

Verfahren zur Herstellung von ein- und mehrschichtigen Holzwerkstoffen sind im Prinzip bekannt und zum Beispiel in M. Dunky, P. Niemz, Holzwerkstoffe und Leime, Springer 2002, Seiten 91 bis 150 beschrieben. Ein fester Bestandteil des Herstellprozesses ist das aufwändige und kostenintensive Abschleifen des Holzwerkstoffes direkt nach der Heißpresse. Gemäß Seite 129, Absatz 3, dient das Abschleifen der Entfernung der Presshaut. Die Presshaut, die auf die Plastifizierung des Holzes in der Heißpresse zurückzuführen ist, muss hingegen abgeschliffen werden, da sie den Holzwerkstoff so versiegelt, dass eine direkte Beschichtung mit Dekorpapieren nicht möglich ist.

Die Beschichtung von Holzwerkstoffen mit Dekorpapieren erfolgt üblicherweise mit aminoharzimprägnierten Dekorpapieren. Hierbei sind melaminharzimprägnierte Dekorpapiere und harnstoffharzhaltige Dekorpapiere zu unterscheiden.

Melaminharzimprägnierte Dekorpapiere werden zusammen mit der Holzwerkstoffplatte in der Heißpresse unter Druck (bis zu 60 bar) auf ca. 200°C erhitzt. Um eine dauerhafte Verbindung zwischen Platte und Papier herzustellen ist das Schleifen der Holzwerkstoffplatte erforderlich. Harnstoffharzimprägnierte Dekorpapiere werden üblicherweise mit Hilfe eines sog. Härtervorstrichs und eines sog. Flächenleimes oder Kaschierleimes auf eine Holzwerkstoffplatte aufgebracht. Um eine dauerhafte Verbindung zwischen Platte und Papier herzustellen ist auch hier das Schleifen der Holzwerkstoffplatte erforderlich.

Das Schleifen von Holzwerkstoffplatten ist ein verbesserungsbedürftiger zeit- und materialaufwendiger Arbeitsschritt.

Der vorliegenden Erfindung lag daher die Aufgabe zugrunde, den zuvor genannten Nachteilen abzuhelfen, insbesondere eine einfachere und kostengünstige Methode zu entwickeln, Holzwerkstoffe mit Dekorpapieren beschichten zu können.

Demgemäß wurde ein neues und verbessertes Verfahren zur Beschichtung von Holzwerkstoffen gefunden, welches dadurch gekennzeichnet ist, dass man die Oberfläche eines Holzwerkstoffes mit 0,05 bis 50 g/m², bevorzugt 0,1 bis 20 g/m², besonders bevorzugt 0,3 bis 10 g/m² einer oberflächenaktiven Substanz, bevorzugt als 0,1 bis 60 Gew.-%ige, bevorzugt 0,5 bis 50 Gew.-%-ige, besonders bevorzugt 1 bis 40 Gew.-%ige, insbesondere 2,5 bis 30 Gew.-%-ige Lösungen, insbesondere einer Lösung eines Tensids, behandelt. Bevorzugt wird die erfindungsgemäße Beschichtung anstelle, d.h. ohne, Anschleifen der Holzwerkstoffe durchgeführt. Ferner betrifft die vorliegende Erfindung beschichtete Holzwerkstoffe hergestellt gemäß des voranstehenden Verfahrens.

Als Tenside eignen sich anionische, kationische, nicht-ionische, amphotere Tenside oder deren Gemische.

Als anionische Tenside eignen sich
- Alkali-, Erdalkali- oder Ammoniumsulfate wie Ammoniumsulfat, Lithiumsulfat, Natriumsulfat, Kaliumsulfat, Calciumsulfat, Magnesiumsulfat, Strontiumsulfat, Lithiumhydrogensulfat, Natriumhydrogensulfat, Kaliumhydrogensulfat, Calciumhydrogensulfat, Magnesiumhydrogensulfat, Strontiumhydrogensulfat, bevorzugt Natriumsulfat, Kaliumsulfat, Calciumsulfat, Magnesiumsulfat, Natriumhydrogensulfat, Kaliumhydrogensulfat, Calciumhydrogensulfat, Magnesiumhydrogensulfat, bevorzugt Natriumsulfat, Kaliumsulfat, Calciumsulfat und Magnesiumsulfat, insbesondere Natriumsulfat und Ammoniumsulfat,
- Sulfate von verzweigten oder unverzweigten Fettalkoholen oder Oxoalkoholen, verzweigten oder unverzweigten Fettalkoholalkoxylaten oder Oxoalkoholalkoxylaten,
- Fettalkoholethersulfate mit verzweigten oder unverzweigten C₈-C₂₀-Alkylketten und 2 bis 50 Ethylenoxid (EO)-Einheiten, bevorzugt Fettalkoholethersulfate mit einer C₈-C₁₄-Akylkette und 2 bis 12 Ethylenoxid-Einheiten,
- Sulfate von Fettsäuren und Ölen,
- ethoxylierte Alkylphenolsulfate,
- Alkoholsulfate,
- Sulfate von ethoxylierten Alkoholen oder Fettsäureestern,
- Sulfate von Naphtylalkohol oder ethoxyliertem Naphthylalkohol,
- Sulfate von Arylalkylalkoholen oder Arylalkylethoxylaten,
- Alkali-, Erdalkali- oder Ammoniumsulfonate wie Alkylarylsulfonate, Diphenylsulfonate, α-Olefinsulfonate, Ligninsulfonate, Sulfonate von Fettsäuren und Ölen, Sulfonate von ethoxylierten Alkylphenolen, Sulfonate von alkoxylierten Arylphenolen, Naphthalinsulfonat-Kondensate, Dodecyl- und Tridecylbenzolsulfonate, Naphthalin- und Sikylnaphthalinsulfonate oder Sulfosuccinate,
- Sulfonate von verzweigten oder unverzweigten Fettalkoholen oder Oxoalkoholen,
- Sulfonate von verzweigten oder unverzweigten Fettalkoholalkoxylaten oder Oxoalkoholalkoxylaten,
- Sulfonate von Fettsäuren und Ölen,
- ethoxylierte Alkylphenolsulfonate,
- Alkoholsulfonate,
- Sulfonate von ethoxylierten Alkoholen oder Fettsäureestern,
- Sulfonate von Naphtylalkohol oder ethoxyliertem Naphthylalkohol,
- Sulfonate von Arylalkylalkoholen oder Arylalkylethoxylaten,
- Phosphate von verzweigten oder unverzweigten Fettalkoholen oder Oxoalkoholen,
- Phosphate von verzweigten oder unverzweigten Fettalkoholalkoxylaten oder Oxoalkoholalkoxylaten,
- Phosphate von Fettsäuren und Ölen,
- ethoxylierte Alkylphenolphosphate,
- Alkoholphosphate,
- Phosphate von ethoxylierten Alkoholen oder Fettsäureestern,
- Phosphate von Naphtylalkohol oder ethoxyliertem Naphthylalkohol,
- Phosphate von Arylalkylalkoholen oder Arylalkylethoxylaten.

Als nichtionische Tenside eignen sich
- Alkoxylate wie Alkohole, Alkylphenole, Amine, Amide, Arylphenole, Fettsäuren oder Fettsäureester, die mit 1 bis 50 Equivalenten Alkylenoxid wie Ethylenoxid und/oder Propylenoxid, bevorzugt Ethylenoxid, alkoxyliert,
- N-substituierte Fettsäureamide wie Fettsäureglucamide oder Fettsäurealkanolamide,
- Aminoxide,
- Ester wie Fettsäureester, Glycerinester oder Monoglyceride,
- Zucker-basierte Tenside wie Sorbitan, ethoxylierte Sorbitane, Saccharoseester, Glycoseester oder Alkyl-polyglucoside,
- polymere Tenside wie Homo- oder Copolymer von Vinylpyrrolidon, Vinylalkohole oder Vinylacetate,
- Blockpolymere wie Blockpolymere des Typs A-B oder A-B-A, die Blöcke aus Polyethylenoxid und Polypropylenoxid enthalten, oder des Typs A-B-C, die Alkanol und Blöcke aus Polyethylenoxid und Polypropylenoxid enthalten.

Die nichtionischen Tenside können Alkylalkoholalkoxylate mit unverzweigter oder verzweigter, primärer oder sekundärer Alkylkette, oder Arylalkoxylate sein. Bevorzugt sind Alkyl- oder Arylalkoxylate der Formel (I) 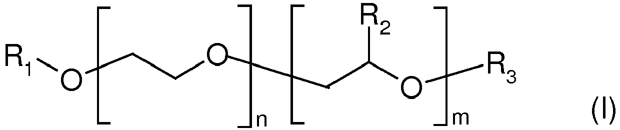 mit
R₁ = lineares oder verzweigtes, primäres oder sekundäres C₇- bis C₂₄-Alkylphenyl und Naphthyl,
R₂ = lineares oder verzweigtes C₁- bis C₁₆-Alkyl,
R₃ = H, Benzyl, lineares oder verzweigtes C₁- bis C₁₈-Alkyl,
n = 1 bis 200,
m = 0 bis 80,
wobei die Alkylenoxid-Einheiten in beliebiger Reihenfolge blockweise oder statistisch angeordnet sein können.

Bevorzugte nichtionische Tenside sind verzweigte oder unverzweigte C₈-bis C₁₅-Alkylethoxyate mit 3 bis 20 Ethylenoxid-Einheiten.

Bevorzugte nichtionische Tenside sind verzweigte oder unverzweigte C₈- bis C₁₅-Alkylethoxylate mit 3 bis 20 Ethylenoxid-Einheiten.

Die nichtionischen Tenside können PO/EO-Blockcopolymerisate sein.

Die nichtionischen Tenside können auf C₅-Zuckern oder C₆-Zuckern basierende Alkylpolyglucoside oder deren Mischungen sein, vorzugsweise der allgemeinen Formel (IIa) oder (IIb)

R₁O(R₂O)_{b}(Z)ₐ (IIa)

R₁O(Z)ₐ(R₂O)_{b}H (IIb)

mit
R₁ = lineares oder verzweigtes C₄- bis C₃₀-Alkyl,
R₂ = C₂- bis C₄-Alkylen,
Z = unabhängig voneinander ein Zuckerrest, vorzugsweise Glucose oder Xylose
b = 0 bis 12,
a = 1 bis 15, auch gebrochene Zahlen sind möglich.

In bevorzugten Alkylpolyglykosiden ist R₁ ein linearer oder verzweigter C₈- bis C₁₆-Alkylrest, b = 0 und a = 1,1 bis 4.

Als kationische Tenside eignen sich
- quaternäre Tenside, wie quartäre Ammoniumverbindungen mit einer oder zwei hydrophoben Gruppen, Cetyltrimethylammoniumbromid, Seifen oder Ammoniumsalze von langkettigen primären Aminen.

Geeignete amphotere Tenside sind Alkylbetaine und Imidazoline.

Weitere geeignete Tenside sind aus McCutcheon's, Vol.1: Emulsifiers & Detergents, McCutcheon's Directories, Glen Rock, USA, 2008 (International Ed. or North American Ed.) bekannt.

Die Lösungen setzen sich aus Lösungsmitteln und der oberflächenaktiven Substanz zusammen. Als Lösungsmittel eignen sich beispielsweise Alkohole, Glykole, organische Lösungsmittel oder Wasser, bevorzugt Methanol, Ethanol oder Wasser, besonders bevorzugt Wasser.

In einer weiteren bevorzugten Ausführungsform kann die oberflächenaktive Substanz (z.B. das Tensid) zusammen mit dem Härtervorstrich im Massenverhältnissen von 0,001:1 bis 1:1 bevorzugt von 0,005:1 bis 0,5:1, besonders bevorzugt 0.01:1 bis 0,02:1 getrennt oder vermischt auf die Oberfläche des Holzwerkstoffes aufgebracht werden.

Das Aufbringen der oberflächenaktiven Substanzen kann nach üblichen Methoden wie Aufwalzen, Aufsprühen, Aufrakeln, Aufstreichen, bevorzugt Aufwalzen oder Aufsprühen, besonders bevorzugt Aufsprühen erfolgen. Hierbei betragen die Temperaturen 10 bis 50°C, bevorzugt 15 bis 40°C, besonders bevorzugt 20 bis 25°C.

Holzwerkstoffe, insbesondere in Form von Platten bestehen aus Kanten und Flächen. In dieser Erfindung werden die Flächen als Oberflächen bezeichnet.

Die erfindungsgemäß beschichteten Holzwerkstoffe eignen sich zur Verwendung als dekorative Holzwerkstoffplatten insbesondere zur Herstellung von Möbelplatten.

### Beispiele

### Beispiele 1 bis 8:

Es wurden handelsübliche ungeschliffene 19 mm P2 Spanplatte (Emissionsklasse E1) [Beispiele 1 bis 8] verwendet.

### Tenside:

| | |
|---|---|
| • SDS: | Sulfopon® 12 G = C₁₂-Alkylsulfat, Na-Salz, anionisches Tensid |
| • KP933: | Kauropal® 933 = Isononyl-PO/EO-OH, nichtionisches Tensid |

Die Ergebnisse sind Tabelle 1 zu entnehmen.

### Vergleichsbeispiele V1 und V2:

Es wurden jeweils handelsübliche ungeschliffene 19 mm P2 Spanplatte (Emissionsklasse E1) verwendet.

Die Ergebnisse sind Tabelle 1 zu entnehmen.

Prüfung der Beschichtungsfähigkeit mittels Tropfenstandzeit:
Als Maß für die Beschichtungsfähigkeit wurde die Tropfenstandzeit eines Wasser- bzw. des Härtertropfens herangezogen: mittels einer Pipette wird ein Flüssigkeitstropfen definierten Volumens auf die Holzwerkstoffoberfläche aufgetragen und die Zeit bis zum vollständigen Einzug der Flüssigkeit in die HWS-Oberfläche ermittelt. Je länger die Tropfenstandzeit ist, desto schlechter ist die Beschichtungsfähigkeit.

### Beschichtungsmaterialien:

Die Holzwerkstoffplatten wurden wie folgt mit Dekorpapieren beschichtet.
- MFC: Beschichtung der Holzwerkstoffplatten mit melaminharzimprägnierten Dekorpapieren.
- Folie: Beschichtung der Holzwerkstoffplatten mit Härtervorstrich, Flächenleim und harnstoffharzimprägnierten Dekorpapieren.

### Materialprüfung der Beschichtung:

- GST = Gitterschnitttest:
   Mit einem Cuttermesser wurde auf der Oberfläche ein rautenförmiges Schnittmuster erzeugt (Abstand der einzelnen Schnitte ca. 1 bis 2 mm). Bei schlechter Haftung kommt es insbesondere in den spitzwinkligen Ecken der Rauten zum Abplatzen der oberflächlichen Beschichtung. Die Bewertung wurde nach einem vereinfachten Schulnotensystem vorgenommen: 1- keine Abplatzer, 2- einige Abplatzer, 3-viele Abplatzer
- R = "Reißen":
   Nach der Beschichtung wurde an einem Papierüberstand senkrecht zur Oberfläche der Spanplatte gezogen. Aus der Art des Abrisses wurde auf die Güte der Haftung geschlossen (Bewertung: gut = Abriss erfolgte direkt an der Kante; mäßig = Papier reißt zum Teil an der Kante ab und löst sich zum Teil wieder von der Platte; schlecht: Folie lässt sich von der Oberfläche leicht abziehen).

**Tabelle 1**

| Beispiel Nr. | Plattentyp | Tensid | Tensidmenge | Tropfenstandzeit [min] | Beschichtungsmaterial | Materialprüfung | Haftungswert |
|---|---|---|---|---|---|---|---|
| 1 | Span | KP933 | 0,5 g/m² | 24 | MFC | GST | 1 |
| 2 | Span | KP933 | 0,5 g/m² | 24 | Folie | R | gut |
| 3 | Span | KP933 | 1 g/m² | 17 | MFC | GST | 1 |
| 4 | Span | KP933 | 1 g/m² | 17 | Folie | R | gut |
| 5 | Span | SDS | 1 g/m² | 9 | MFC | GST | 1 |
| 6 | Span | SDS | 1 g/m² | 9 | Folie | R | gut |
| 7 | Span | SDS | 2 g/m² | 1 | MFC | GST | 1-2 |
| 8 | Span | SDS | 2 g/m² | 1 | Folie | R | mäßig |
| V1 | Span | - | - | >60 | MFC | R | 2-3 |
| V2 | Span | - | - | >60 | Folie | GST | schlecht |

## Patentansprüche

1. Verfahren zur Beschichtung von Holzwerkstoffen, **dadurch gekennzeichnet, dass** man die Oberfläche eines Holzwerkstoffes mit 0,05 bis 50 g/m² einer oberflächenaktiven Substanz behandelt, wobei man Lösungen einsetzt, die sich aus Lösungsmitteln und der oberflächenaktiven Substanz zusammensetzen, und man die Holzwerkstoffe mit Dekorpapieren beschichtet.

2. Verfahren zur Beschichtung von Holzwerkstoffen nach Anspruch 1, **dadurch gekennzeichnet, dass** man die Oberfläche eines Holzwerkstoffes mit einer oberflächenaktiven Substanz behandelt, ohne anschleifen des Holzwerkstoffes.

3. Verfahren zur Beschichtung von Holzwerkstoffen nach einer der Ansprüche 1 oder 2, **dadurch gekennzeichnet, dass** man die Oberfläche eines Holzwerkstoffes mit 0,1 bis 20 g/m² einer oberflächenaktiven Substanz behandelt.

4. Verfahren zur Beschichtung von Holzwerkstoffen nach einer der Ansprüche 1 oder 2, **dadurch gekennzeichnet, dass** man die Oberfläche eines Holzwerkstoffes mit 0,3 bis 10 g/m² einer oberflächenaktiven Substanz behandelt.

5. Verfahren zur Beschichtung von Holzwerkstoffen nach einem der Ansprüche 1 bis 4, **dadurch gekennzeichnet, dass** man die oberflächenaktive Substanz als 0,1 bis 60 Gew.-%ige Lösung einsetzt.

6. Verfahren zur Beschichtung von Holzwerkstoffen nach einem der Ansprüche 1 bis 4, **dadurch gekennzeichnet, dass** man die oberflächenaktive Substanz als 0,5 bis 50 Gew.-%-ige Lösung einsetzt.

7. Verfahren zur Beschichtung von Holzwerkstoffen nach einem der Ansprüche 1 bis 4, **dadurch gekennzeichnet, dass** man die oberflächenaktive Substanz als 1 bis 40 Gew.-%ige Lösung einsetzt.

8. Verfahren zur Beschichtung von Holzwerkstoffen nach einem der Ansprüche 1 bis 4, **dadurch gekennzeichnet, dass** man die oberflächenaktive Substanz als 2,5 bis 30 Gew.-%-ige Lösung einsetzt.

9. Verfahren zur Beschichtung von Holzwerkstoffen nach einem der Ansprüche 1 bis 4, **dadurch gekennzeichnet, dass** man die oberflächenaktive Substanz als 1 bis 40 Gew.-%ige Lösung einsetzt.

10. Verfahren zur Beschichtung von Holzwerkstoffen nach einem der Ansprüche 1 bis 9, **dadurch gekennzeichnet, dass** die oberflächenaktive Substanz ein Tensid ist.

11. Verfahren zur Beschichtung von Holzwerkstoffen nach Anspruch 10, **dadurch gekennzeichnet, dass** man als Tensid anionische, kationische, nicht-ionische, amphotere Tenside oder deren Gemische einsetzt.

12. Verfahren zur Beschichtung von Holzwerkstoffen nach Anspruch 11, **dadurch gekennzeichnet, dass** man als anionische Tenside Alkali-, Erdalkali- oder Ammoniumsulfate, Sulfate von verzweigten oder unverzweigten Fettalkoholen oder Oxoalkoholen, verzweigten oder unverzweigten Fettalkoholalkoxylaten oder Oxoalkoholalkoxylaten, Fettalkoholethersulfate mit verzweigten oder unverzweigten C₈-C₂₀-Alkylketten und 2 bis 50 Ethylenoxid (EO)-Einheiten, Sulfate von Fettsäuren und Ölen, ethoxylierte Alkylphenolsulfate, Alkoholsulfate, Sulfate von ethoxylierten Alkoholen oder Fettsäureestern, Sulfate von Naphtylalkohol oder ethoxyliertem Naphthylalkohol, Sulfate von Arylalkylalkoholen oder Arylalkylethoxylaten, Alkali-, Erdalkali- oder Ammoniumsulfonate, Sulfonate von Fettsäuren und Ölen, Sulfonate von ethoxylierten Alkylphenolen, Sulfonate von alkoxylierten Arylphenolen, Naphthalinsulfonat-Kondensate, Dodecyl- und Tridecylbenzolsulfonate, Naphthalin-und Sikylnaphthalinsulfonate oder Sulfosuccinate, Sulfonate von verzweigten oder unverzweigten Fettalkoholen oder Oxoalkoholen, Sulfonate von verzweigten oder unverzweigten Fettalkoholalkoxylaten oder Oxoalkoholalkoxylaten, Sulfonate von Fettsäuren und Ölen, ethoxylierte Alkylphenolsulfonate, Alkoholsulfonate, Sulfonate von ethoxylierten Alkoholen oder Fettsäureestern, Sulfonate von Naphtylalkohol oder ethoxyliertem Naphthylalkohol, Sulfonate von Arylalkylalkoholen oder Arylalkylethoxylaten, Phosphate von verzweigten oder unverzweigten Fettalkoholen oder Oxoalkoholen, Phosphate von verzweigten oder unverzweigten Fettalkoholalkoxylaten oder Oxoalkoholalkoxylaten, Phosphate von Fettsäuren und Ölen, ethoxylierte Alkylphenolphosphate, Alkoholphosphate, Phosphate von ethoxylierten Alkoholen oder Fettsäureestern, Phosphate von Naphtylalkohol oder ethoxyliertem Naphthylalkohol, Phosphate von Arylalkylalkoholen oder Arylalkylethoxylatenoder deren Gemische einsetzt.

13. Verfahren zur Beschichtung von Holzwerkstoffen nach Anspruch 11, **dadurch gekennzeichnet, dass** man Alkali-, Erdalkali- oder Ammoniumsulfate wie Ammoniumsulfat, Lithiumsulfat, Natriumsulfat, Kaliumsulfat, Calciumsulfat, Magnesiumsulfat, Strontiumsulfat, Lithiumhydrogensulfat, Natriumhydrogensulfat, Kaliumhydrogensulfat, Calciumhydrogensulfat, Magnesiumhydrogensulfat, Strontiumhydrogensulfat, bevorzugt Natriumsulfat, Kaliumsulfat, Calciumsulfat, Magnesiumsulfat, Natriumhydrogensulfat, Kaliumhydrogensulfat, Calciumhydrogensulfat, Magnesiumhydrogensulfat, bevorzugt Natriumsulfat, Kaliumsulfat, Calciumsulfat und Magnesiumsulfat, insbesondere Natriumsulfat und Ammoniumsulfat oder deren Gemische, einsetzt.

14. Verfahren zur Beschichtung von Holzwerkstoffen nach Anspruch 11, **dadurch gekennzeichnet, dass** man als Tensid C₁₂-Alkylsulfat, Na-Salz einsetzt.

15. Verfahren zur Beschichtung von Holzwerkstoffen nach Anspruch 11, **dadurch gekennzeichnet, dass** man als Tensid Isononyl-PO/EO-OH einsetzt.

16. Beschichtete Holzwerkstoffe erhältlich nach einem der Ansprüche 1 bis 15.

17. Verwendung der beschichteten Holzwerkstoffe nach Anspruch 16 als dekorative Holzwerkstoffplatten insbesondere zur Herstellung von Möbelplatten.

## Claims

1. A method for coating wood-based materials, which comprises treating the surface of a wood-based material with 0.05 to 50 g/m² of a surface-active substance, placing solutions composed of solvents and the surface-active substance, and coating the wood-based materials with decorative papers.

2. The method for coating wood-based materials according to claim 1, wherein the surface of a wood-based material is treated with a surface-active substance, without partial abrading of the wood-based material.

3. The method for coating wood-based materials according to either of claims 1 and 2, wherein the surface of a wood-based material is treated with 0.1 to 20 g/m² of a surface-active substance.

4. The method for coating wood-based materials according to either of claims 1 and 2, wherein the surface of a wood-based material is treated with 0.3 to 10 g/m² of a surface-active substance.

5. The method for coating wood-based materials according to any of claims 1 to 4, wherein the surface-active substance is used as a 0.1 to 60 wt% solution.

6. The method for coating wood-based materials according to any of claims 1 to 4, wherein the surface-active substance is used as a 0.5 to 50 wt% solution.

7. The method for coating wood-based materials according to any of claims 1 to 4, wherein the surface-active substance is used as a 1 to 40 wt% solution.

8. The method for coating wood-based materials according to any of claims 1 to 4, wherein the surface-active substance is used as a 2.5 to 30 wt% solution.

9. The method for coating wood-based materials according to any of claims 1 to 4, wherein the surface-active substance is used such as 1 to 40 wt% solution.

10. The method for coating wood-based materials according to any of claims 1 to 9, wherein the surface-active substance is a surfactant.

11. The method for coating wood-based materials according to claim 10, wherein said surfactant used comprises anionic, cationic, nonionic, amphoteric surfactants or mixtures thereof.

12. The method for coating wood-based materials according to claim 11, wherein said anionic surfactants used comprise alkali metal, alkaline earth metal or ammonium sulfates, sulfates of branched or unbranched fatty alcohols or oxo-process alcohols, branched or unbranched fatty alcohol alkoxylates or oxo-process alcohol alkoxylates, fatty alcohol ether sulfates having branched or unbranched C₈-C₂₀ alkyl chains and 2 to 50 ethylene oxide (EO) units, sulfates of fatty acids and oils, ethoxylated alkylphenol sulfates, alcohol sulfates, sulfates of ethoxylated alcohols or fatty acid esters, sulfates of naphthyl alcohol or ethoxylated naphthyl alcohol, sulfates of arylalkyl alcohols or arylalkyl ethoxylates, alkali metal, alkaline earth metal or ammonium sulfonates, sulfonates of fatty acids and oils, sulfonates of ethoxylated alkylphenols, sulfonates of alkoxylated arylphenols, naphthalenesulfonate condensates, dodecyl- and tridecylbenzenesulfonates, naphthalene- and sikylnaphthalenesulfonates or sulfosuccinates, sulfonates of branched or unbranched fatty alcohols or oxo-process alcohols, sulfonates of branched or unbranched fatty alcohol alkoxylates or oxo-process alcohol alkoxylates, sulfonates of fatty acids and oils, ethoxylated alkylphenol sulfonates, alcohol sulfonates, sulfonates of ethoxylated alcohols or fatty acid esters, sulfonates of naphthyl alcohol or ethoxylated naphthyl alcohol, sulfonates of arylalkyl alcohols or arylalkyl ethoxylates, phosphates of branched or unbranched fatty alcohols or oxo-process alcohols, phosphates of branched or unbranched fatty alcohol alkoxylates or oxo-process alcohol alkoxylates, phosphates of fatty acids and oils, ethoxylated alkylphenol phosphates, alcohol phosphates, phosphates of ethoxylated alcohols or fatty acid esters, phosphates of naphthyl alcohol or ethoxylated naphthyl alcohol, phosphates of arylalkyl alcohols or arylalkyl ethoxylates, or mixtures thereof.

13. The method for coating wood-based materials according to claim 11, wherein alkali metal, alkaline earth metal or ammonium sulfates are used such as ammonium sulfate, lithium sulfate, sodium sulfate, potassium sulfate, calcium sulfate, magnesium sulfate, strontium sulfate, lithium hydrogensulfate, sodium hydrogensulfate, potassium hydrogensulfate, calcium hydrogensulfate, magnesium hydrogensulfate, strontium hydrogensulfate, preferably sodium sulfate, potassium sulfate, calcium sulfate, magnesium sulfate, sodium hydrogensulfate, potassium hydrogensulfate, calcium hydrogensulfate, magnesium hydrogensulfate, preferably sodium sulfate, potassium sulfate, calcium sulfate and magnesium sulfate, more particularly sodium sulfate and ammonium sulfate, or mixtures thereof.

14. The method for coating wood-based materials according to claim 11, wherein said surfactant used comprises C₁₂ alkyl sulfate, Na salt.

15. The method for coating wood-based materials according to claim 11, wherein said surfactant used comprises isononyl-PO/EO-OH.

16. A coated wood-based material obtainable according to any of claims 1 to 15.

17. The use of the coated wood-based material according to claim 16 as decorative wood-based material boards more particularly for the production of furniture boards.

## Revendications

1. Procédé de revêtement de matériaux à base de bois, **caractérisé en ce que** la surface d'un matériau à base de bois est traitée avec 0,05 à 50 g/m² d'une substance tensioactive, des solutions composées par des solvants et la substance tensioactive étant appliquées, et les matériaux à base de bois étant revêtus avec des papiers décoratifs.

2. Procédé de revêtement de matériaux à base de bois selon la revendication 1, **caractérisé en ce que** la surface d'un matériau à base de bois est traitée avec une substance tensioactive, sans ponçage du matériau à base de bois.

3. Procédé de revêtement de matériaux à base de bois selon l'une quelconque des revendications 1 et 2, **caractérisé en ce que** la surface d'un matériau à base de bois est traitée avec 0,1 à 20 g/m² d'une substance tensioactive.

4. Procédé de revêtement de matériaux à base de bois selon l'une quelconque des revendications 1 et 2, **caractérisé en ce que** la surface d'un matériau à base de bois est traitée avec 0,3 à 10 g/m² d'une substance tensioactive.

5. Procédé de revêtement de matériaux à base de bois selon l'une quelconque des revendications 1 à 4, **caractérisé en ce que** la substance tensioactive est utilisée sous la forme d'une solution à 0,1 à 60 % en poids.

6. Procédé de revêtement de matériaux à base de bois selon l'une quelconque des revendications 1 à 4, **caractérisé en ce que** la substance tensioactive est utilisée sous la forme d'une solution à 0,5 à 50 % en poids.

7. Procédé de revêtement de matériaux à base de bois selon l'une quelconque des revendications 1 à 4, **caractérisé en ce que** la substance tensioactive est utilisée sous la forme d'une solution à 1 à 40 % en poids.

8. Procédé de revêtement de matériaux à base de bois selon l'une quelconque des revendications 1 à 4, **caractérisé en ce que** la substance tensioactive est utilisée sous la forme d'une solution à 2,5 à 30 % en poids.

9. Procédé de revêtement de matériaux à base de bois selon l'une quelconque des revendications 1 à 4, **caractérisé en ce que** la substance tensioactive est utilisée une solution à 1 à 40 % en poids.

10. Procédé de revêtement de matériaux à base de bois selon l'une quelconque des revendications 1 à 9, **caractérisé en ce que** la substance tensioactive est un tensioactif.

11. Procédé de revêtement de matériaux à base de bois selon la revendication 10, **caractérisé en ce que** des tensioactifs anioniques, cationiques, non ioniques, amphotères ou leurs mélanges sont utilisés en tant que tensioactif.

12. Procédé de revêtement de matériaux à base de bois selon la revendication 11, **caractérisé en ce que** des sulfates alcalins, alcalino-terreux ou d'ammonium, des sulfates d'alcools gras ramifiés ou non ramifiés ou d'oxoalcools, des alcoxylates d'alcools gras ramifiés ou non ramifiés ou des alcoxylates d'oxoalcools, des éther-sulfates d'alcools gras contenant des chaînes alkyle en C₈-C₂₀ ramifiées ou non ramifiées et 2 à 50 unités oxyde d'éthylène (EO), des sulfates d'acides gras et d'huiles, des sulfates d'alkylphénols éthoxylés, des sulfates d'alcools, des sulfates d'alcools éthoxylés ou d'esters d'acides gras, des sulfates d'alcool naphtylique ou d'alcool naphtylique éthoxylé, des sulfates d'alcools arylalkyliques ou d'éthoxylates d'arylalkyle, des sulfonates alcalins, alcalino-terreux ou d'ammonium, des sulfonates d'acides gras et d'huiles, des sulfonates d'alkylphénols éthoxylés, des sulfonates d'arylphénols alcoxylés, des condensats de sulfonate de naphtaline, des sulfonates de dodécyl- et tridécylbenzène, des sulfonates ou sulfosuccinates de naphtaline et sikylnaphtaline, des sulfonates d'alcools gras ramifiés ou non ramifiés ou d'oxoalcools, des sulfonates d'alcoxylates d'alcools gras ramifiés ou non ramifiés ou d'alcoxylates d'oxoalcools, des sulfonates d'acides gras et d'huiles, des sulfonates d'alkylphénols éthoxylés, des sulfonates d'alcools, des sulfonates d'alcools éthoxylés ou d'esters d'acides gras, des sulfonates d'alcool naphtylique ou d'alcool naphtylique éthoxylé, des sulfonates d'alcools arylalkyliques ou des éthoxylates d'arylalkyle, des phosphates d'alcools gras ramifiés ou non ramifiés ou d'oxoalcools, des phosphates d'alcoxylates d'alcools gras ramifiés ou non ramifiés ou d'alcoxylates d'oxoalcools, des phosphates d'acides gras et d'huiles, des phosphates d'alkylphénols éthoxylés, des phosphates d'alcools, des phosphates d'alcools éthoxylés ou d'esters d'acides gras, des phosphates d'alcool naphtylique ou d'alcool naphtylique éthoxylé, des phosphates d'alcools arylalkyliques ou des éthoxylates d'arylalkyle ou leurs mélanges sont utilisés en tant que tensioactifs anioniques.

13. Procédé de revêtement de matériaux à base de bois selon la revendication 11, **caractérisé en ce que** le sulfate d'ammonium, le sulfate de lithium, le sulfate de sodium, le sulfate de potassium, le sulfate de calcium, le sulfate de magnésium, le sulfate de strontium, l'hydrogénosulfate de lithium, l'hydrogénosulfate de sodium, l'hydrogénosulfate de potassium, l'hydrogénosulfate de calcium, l'hydrogénosulfate de magnésium, l'hydrogénosulfate de strontium, de préférence le sulfate de sodium, le sulfate de potassium, le sulfate de calcium, le sulfate de magnésium, l'hydrogénosulfate de sodium, l'hydrogénosulfate de potassium, l'hydrogénosulfate de calcium, l'hydrogénosulfate de magnésium, de préférence le sulfate de sodium, le sulfate de potassium, le sulfate de calcium et le sulfate de magnésium, notamment le sulfate de sodium et le sulfate d'ammonium ou leurs mélanges sont utilisés en tant que sulfates alcalins, alcalino-terreux ou d'ammonium.

14. Procédé de revêtement de matériaux à base de bois selon la revendication 11, **caractérisé en ce qu'**un sulfate d'alkyle en C₁₂, sel de Na est utilisé en tant que tensioactif.

15. Procédé de revêtement de matériaux à base de bois selon la revendication 11, **caractérisé en ce qu'**isononyl-PO/EO-OH est utilisé en tant que tensioactif.

16. Matériaux à base de bois revêtus, pouvant être obtenus selon l'une quelconque des revendications 1 à 15.

17. Utilisation des matériaux à base de bois revêtus selon la revendication 16 en tant que panneaux de matériaux à base de bois décoratifs, notamment pour la fabrication de panneaux de meubles.
